# EUROPÄISCHE PATENTSCHRIFT

(11) **EP 0 496 956 B1**
(45) Veröffentlichungstag und Bekanntmachung des Hinweises auf die Patenterteilung: **15.01.1997**
(21) Anmeldenummer: 91118332.5
(22) Anmeldetag: 28.10.1991
(51) Int. Cl.: G01L 1/26, G01L 1/22, G01L 3/14

(54) **Übertragungselement für Kraft- oder Momentmessvorrichtungen**
Transfer element for force or moment measuring devices
Organe de transfert pour des dispositifs à mesurer la force ou les moments

(30) Priorität: 31.01.1991 DE 4102931; 28.03.1991 DE 4110356
(43) Veröffentlichungstag der Anmeldung: 05.08.1992
(73) Patentinhaber: Pfister Messtechnik GmbH, 86165 Augsburg (DE)
(72) Erfinder: Häfner, Hans Wilhelm, W-8890 Aichach-Walchshofen (DE)
(74) Vertreter: Kahler, Kurt, Dipl.-Ing.

(56) Entgegenhaltungen:
- EP-A- 0 109 977
- EP-A- 0 145 001
- DE-A- 2 736 373
- DE-U- 7 036 123
- DE-U- 8 121 719
- US-A- 4 466 297

## Beschreibung

Die Erfindung betrifft ein Kraftübertragungselement für Kraft- und/oder Momentmeßvorrichtungen gemäß dem Oberbegriff des Patentanspruches 1.

Bei Kraftmeßvorrichtungen besteht häufig das Problem, daß aufgrund von Toleranzen bzw. einer Wärmeausdehnung der Lasteinleitungselemente oder des Fundaments und aufgrund von Schwankungen in der Belastung oder einer seitlichen Beaufschlagung, etwa durch Windstöße oder dergleichen, die Kraftmeßvorrichtung außerhalb der gewünschten senkrechten Kraftrichtung erheblich beeinträchtigt wird.

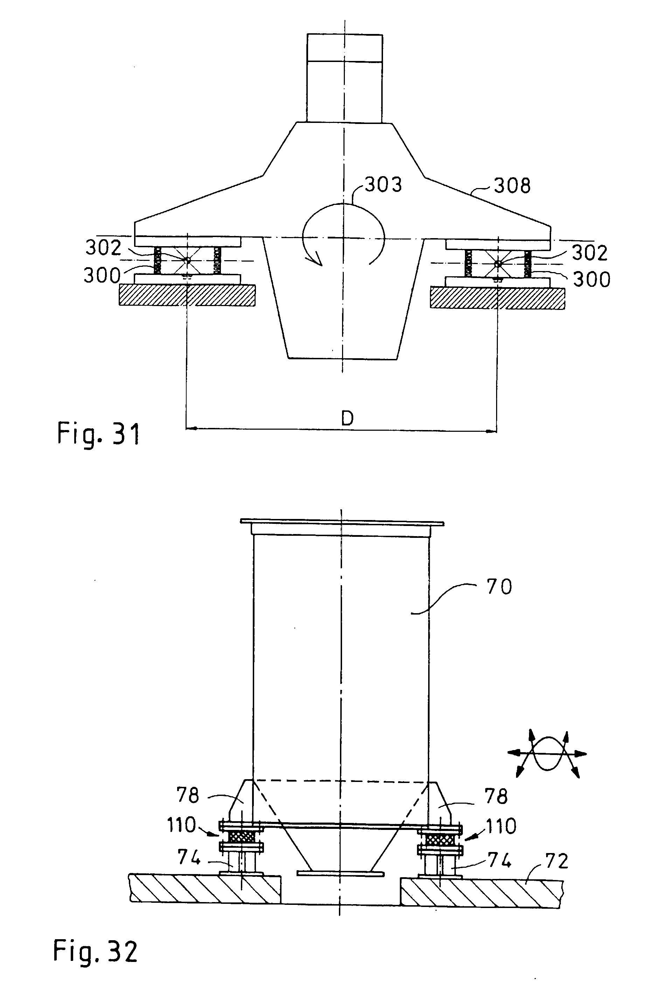

Fig. 32 zeigt beispielsweise ein Silo 70, das über Kraftmeßvorrichtungen 110 und entsprechende Abstützungen 74 auf einem Fundament 72 aufgestellt ist. Über seitliche Flansche 78 des Silos 70 werden die Kraftmeßvorrichtungen 110 belastet. Je nach Füllgrad des Silos 70 kann ein Durchbiegen der Flansche 78 auftreten, so daß die Planparallelität in den Kraftmeßvorrichtungen 110 variieren kann. Durch Wärmeausdehnung kann sich der Abstand zwischen den zentralen Achsen der Kraftmeßvorrichtungen 110 auf der Krafteinleitungsseite erheblich gegenüber der Abstützungsseite verschieben. Bei starkem Seitenwind erfolgt ein Verschwenken des Silos 70 um eine horizontale Achse, was wiederum die Planparallelität in den Kraftmeßvorrichtungen 110 beeinflußt, die von vornherein Schwankungen unterworfen ist. Auch ein Verdrehen um eine vertikale Achse ist kaum zu vermeiden. Es müssen deshalb besondere Vorkehrungen getroffen werden, mit denen die notwendigen Freiheitsgrade der Bewegung gewährleistet werden, ohne die Kraftmeßvorrichtung in der Meßgenauigkeit zu beeinflussen oder gar zu zerstören.

Die EP-PS 0 205 509 beschreibt eine Kraftmeßvorrichtung, bei der als Krafteinleitungselement ein Kolben in einer verhältnismäßig hohen zylindrischen Ausnehmung in einem Topfgehäuse unter Bildung eines engen Ringspalts angeordnet ist, der mit elastomerem Material gefüllt ist, das fest an den Kontaktflächen haftet. Der Kolben wirkt über weiteres elastomeres Material auf einen Drucksensor. Das elastomere Material überträgt die senkrechte Kraftkomponente vollständig auf den Drucksensor, während seitliche Kraftkomponenten vom Kolben über das elastomere Material im Ringspalt auf das Topfgehäuse übertragen werden. Die bekannte Kraftmeßvorrichtung besitzt eine verhältnismäßig hohe Meßgenauigkeit, ihre Herstellung ist jedoch noch relativ aufwendig, und die Anbringung ist kompliziert, wenn die vorgenannten Einflüsse ausgeschaltet werden sollen.

Die DE-A-21 06 192 beschreibt eine Kraftmeßzelle, bei der zwischen zwei Platten ein quaderförmiger Block aus elastomerem Material eingesetzt ist, in den ein Drucksensor eingebettet ist. Eine derartige Kraftmeßvorrichtung ist jedoch relativ ungenau, da sich bei Kraftanwendung der elastomere Block seitlich ausdehnt, was eine erhebliche Hysterese und Nichtlinearität der Meßergebnisse zur Folge hat. Statt des Elastomerblocks können scheibenförmige Einzelkörper mit jeweils anderer Druckfestigkeit aufeinandergesetzt werden, die bei jeweils einer anderen Belastung zerbrechen und in einem Teleskoprohrkörper gestapelt sind.

Die US-A-4,466,297 beschreibt eine Kraftmeßvorrichtung mit Kraftübersetzung durch eine Keilanordnung, wobei der Keil auf einem Polster gelagert ist. Das Polster kann aus einem Ring bestehen, der aus abwechselnden Schichten aus elastomerem Material und Metall aufgebaut ist und der einen Flüssigkeitsraum umgibt. Es liegt somit kein einheitlicher elastomerer Block vor.

Bei der Kraftmeßvorrichtung nach der gattungsbildenden DE-A-35 02 275 ist in einen Topf ein Elastomerpolster eingesetzt, in dem sich eine Druckmeßzelle befindet, und das von einem Kolben belastet wird.

Dieser Kolben ist in dem Topf-Gehäuse mit engem Spalt eingesetzt, so daß es bei außermittiger oder seitlicher Beaufschlagung zu Reibungskontakten oder gar Verkanten des Kolbens in dem Topf-Gehäuse kommen kann.

Die DE-A-36 25 842 befaßt sich mit einer Druckmeßzelle, bei der Druck über in einem topfförmigen Gehäuse eingefülltes elastomeres Material auf einen Drucksensor übertragen wird.

Die DE-A-36 20 360 befaßt sich mit einer Kraftmeßvorrichtung mit einem topfartigen Grundkörper, in den ein Kolben eingesetzt ist, wobei zwischen der Stirnfläche des Kolbens und dem Boden des Grundkörpers ein elastomerer Stoff angeordnet ist, der mit mindestens einem Drucksensor in Kontakt ist. Der Grundkörper wird durch ein an seiner Unterseite angebrachtes, eine elastomere Platte aufweisendes Topflager gehalten.

Die DE-A-21 58 607 betrifft eine Kraftmeßzelle mit Räumen, die mit Flüssigkeit gefüllt und umfangsmäßig durch nachgiebige Elemente abgeschlossen sind. Die Krafteinleitung erfolgt jeweils über das biegesteife Zentrum der nachgiebigen Elemente, die schichtenweise aufgebaut sind.

Die DE-A-29 17 363 zeigt eine Kraftmeßvorrichtung mit einem Körper, der über seine Länge elastisch und über seinen Querschnitt formstabil sein soll. Er enthält eine Flüssigkeit, die über eine Leitung zu einem Druckgeber fließt.

Der Erfindung liegt die Aufgabe zugrunde, ein Kraftübertragungselement für eine Kraft- und/oder Momentmeßvorrichtung zu schaffen, die gegenüber den eingangs genannten Einflüssen unempfindlich ist. Ferner soll ein Kraftübertragungselement angegeben werden, das einfach aufgebaut und einfach herstellbar ist und eine verhältnismäßig hohe Meßgenauigkeit besitzt. Sie soll außerdem von sich aus Rückstellkräfte zur Aufrichtung entwickeln, wobei die notwendigen Freiheitsgrade ohne zusätzliche Bauelemente erzielt werden sollen.

Das erfindungsgemäße Kraftübertragungselement besitzt die Merkmale des Patentanspruchs 1.

Bevorzugte Weiterbildungen der Erfindung bzw. deren Verwendung sind in den übrigen Ansprüchen gekennzeichnet.

Die in Querschnittsrichtung nicht dehnbare Einschließung des elastomeren Materials verhindert einerseits eine radiale Ausdehnung und damit eine Hysterese und Nichtlinearität im Meßergebnis; zum anderen ergibt sich eine derartige Flexibilität, daß erhebliche Toleranzen bei den verbundenen oder anliegenden Elementen ausgeglichen werden. Es ergibt sich praktisch ein messendes Gummimetallelement, das mit hoher Steifheit in senkrechter Richtung wirkt, während ein Nachgeben winkelmäßig, in horizontaler Richtung als auch bei Schwenken um eine horizontale Achse oder ein Verdrehen um eine vertikale Achse ohne nachteiligen Einfluß auf das Meßergebnis bleiben.

Die Verwendung des elastomeren Materials führt zu einer erheblichen Schwingungsdämpfung mit einer von der Steifheit abhängigen, sehr hohen Eigenfrequenz.

Weitere Merkmale und Vorteile der erfindungsgemäßen Kraftmeßvorrichtung und des Herstellungsverfahrens ergeben sich aus der nachfolgenden Beschreibung von Ausführungsbeispielen anhand der Zeichnungen. Es zeigen:
- Fig. 1: einen Vertikalschnitt durch eine Kraftmeßvorrichtung, die ein Kraftübertragungselement gemäß einem ersten Ausführungsbeispiel der Erfindung verwendet;
- Fig. 2: eine Ansicht ähnlich der Fig. 1, jedoch bei belasteter Kraftmeßvorrichtung;
- Fig. 3 und 4: Vertikalschnitte von Ausführungsbeispielen, die gegenüber dem ersten Ausführungsbeispiel abgewandelt wurden;
- Fig. 5 bis 10: Vertikalschnitte durch Kraftmeßvorrichtungen gemäß weiterer Ausführungsbeispiele der Erfindung mit eingebettetem Drucksensor;
- Fig. 11 und 12: Vertikalschnitte durch Kraftmeßvorrichtungen gemäß weiterer Ausführungsbeispiele der Erfindung mit ringförmiger Ausbildung des Kraftübertragungselements;
- Fig. 13 bis 16: Vertikalschnitte durch eine Kraftmeßvorrichtung, die ein Kraftübertragungselement gemäß einem weiteren Ausführungsbeispiel der Erfindung verwendet und verschiedene Modifikationen davon;
- Fig. 17 bis 19: Ansichten ähnlich der Fig. 16 einer Ausführungsform, die von der der Fig. 16 bezüglich des Kraftübertragungselements abgewandelt ist;
- Fig. 20: einen Vertikalschnitt eines ringförmigen Ausführungsbeispiels;
- Fig. 21: einen Vertikalschnitt eines blockförmigen Ausführungsbeispiels;
- Fig. 22: einen Vertikalschnitt durch eine Kraftmeßvorrichtung, die beispielsweise ein Kraftübertragungselement gemäß der Fig. 21 verwendet;
- Fig. 23 bis 25: Ansichten von Kraftmeßvorrichtungen gemäß Ausführungsbeispielen der Erfindung mit flachen, im wesentlichen selbsttragenden Kraftübertragungselementen;
- Fig. 26 und 27: mehrdimensionale Kraftmeßeinheiten mit mehreren Kraftmeßvorrichtungen gemäß den Ausführungsbeispielen;
- Fig. 28 bis 31: Kraftmeßeinheiten unter Verwendung von Kraftmeßvorrichtungen gemäß den Ausführungsbeispielen für eine Momentenbestimmung; und
- Fig. 32: ein Schema eines Systems als Beispiel für die Anwendung erfindungsgemäßer Kraftmeßvorrichtungen.

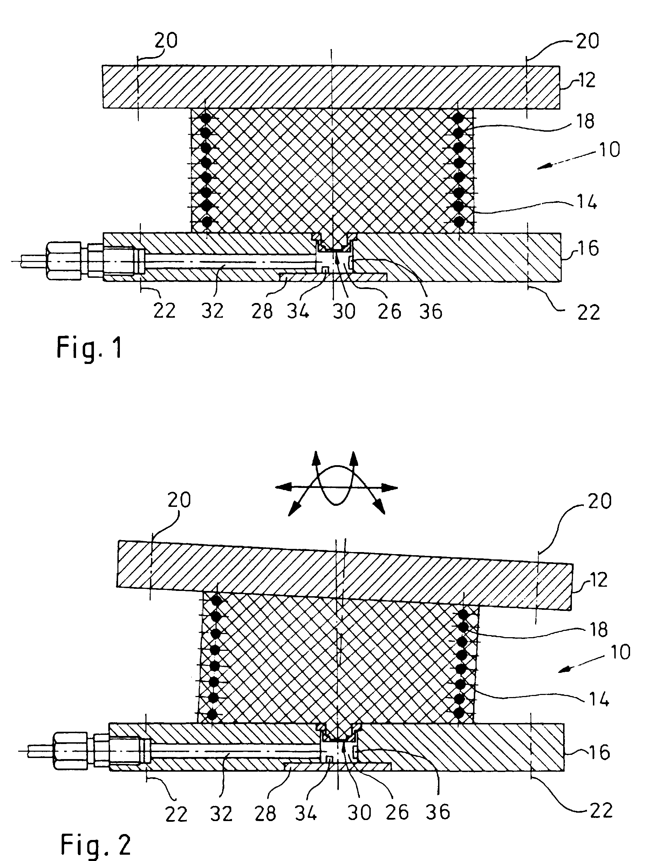

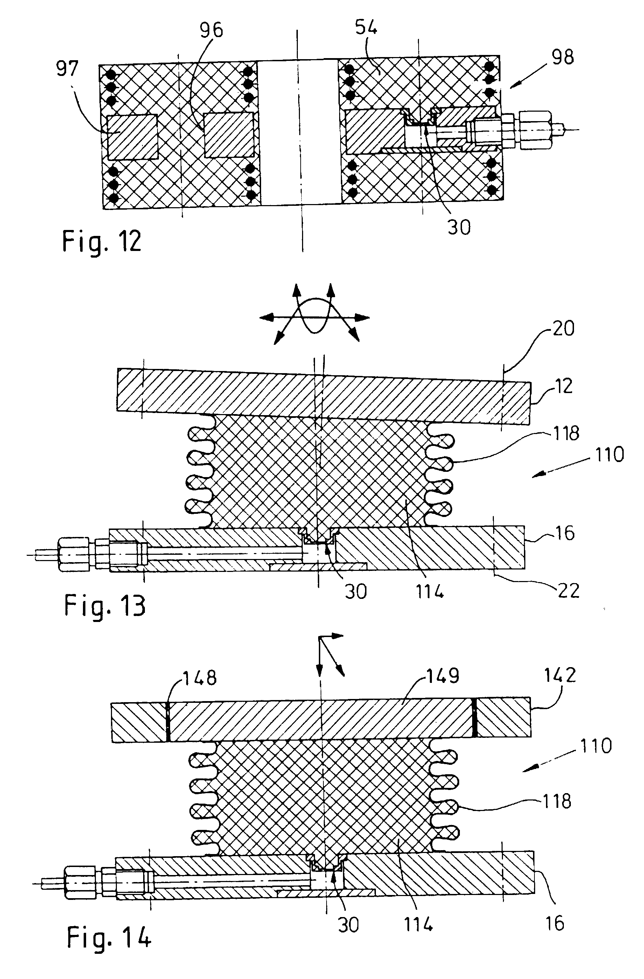

Die in Querschnittsrichtung nicht dehnbare Einschließung des elastomeren Materials kann einmal durch eine Art Korsett erreicht werden, wie dies anhand der Fig. 1 bis 12 erläutert wird oder durch einen in Querschnittsrichtung unelastischen Mantel gemäß den Fig. 13 bis 25. Zunächst wird die Erfindung anhand von Ausführungsformen mit Korsett im einzelnen erläutert.

Es folgt dann eine nur noch kurze Erläuterung der Ausführungsformen mit Mantel, für die, soweit nicht anders angegeben, Aufbau, Funktion, Wirkung und Herstellung den Ausführungsformen mit Korsett entsprechen.

Fig. 1 zeigt eine Kraftmeßvorrichtung 10 mit einer oberen und einer unteren Platte 12 bzw. 16, zwischen denen ein Kraftübertragungselement aus elastomerem Material in Form eines Blocks 14 mit beliebigem, vorzugsweise Kreis- oder Rechteckquerschnitt angeordnet ist.

Gemäß der Erfindung ist dieser vornehmlich zylindrische Block 14 umfangsmäßig nach Art eines Korsetts eingefaßt, wobei dieses Korsett aus einem sich praktisch in Querschnittsrichtung nicht dehnenden Material besteht.

Beim Ausführungsbeispiel ist dazu ganz oder teilweise eine Schraubenfeder 18 in das elastomere Material derart fest haftend eingebettet, daß sie praktisch das gesamte elastomere Material einschließt.

Während die obere Platte 12, wie mit 20 angedeutet, an einem krafteinleitenden Element, etwa einem Silo oder einer Brückenplattform befestigt werden kann, stützt sich die untere Platte 16 auf einer Basis 24 ab und kann auf dieser, wie bei 22 angedeutet, festgeschraubt werden.

Die untere Platte 16 weist eine zentrale Öffnung 26 auf, in die ein Drucksensor 30 eingesetzt ist, der direkt mit dem elastomeren Material des Blocks 14 in Kontakt ist. Bei einer besonders bevorzugten Ausführungsform wird, wie in Fig. 1 gezeigt, der Drucksensor 30 durch einen keramischen, topfförmigen Sensorkörper dargestellt, der an seiner Unterseite mit entsprechenden Druckwandlerelementen, wie einer Brückenschaltung aus Dickfilmwiderständen versehen ist (vgl. EP-A-0 394 632 und Europäische Patentanmeldung EP-A-0 440 011). Das Innere des Sensorkörpers ist ebenfalls mit elastomerem Material gefüllt. Es kann jedoch auch unter Bildung eines Ringspalts und eines Bodenraumes ein Kolben eingesetzt sein, der von elastomerem Material umgeben ist.

Unterhalb des Drucksensors 30 kann etwa auf einer Abdeckplatte 28 eine elektronische Sensorschaltung 34 (Verstärker, Umsetzer) aufgebracht sein, die auch, wie mit 36 angedeutet, an der Seitenwand der Öffnung 26 angebracht werden kann und über ein nicht gezeigtes, durch eine Radialbohrung 32 geführtes Kabel mit einer nicht gezeigten Auswerte- oder Anzeigevorrichtung in Verbindung steht.

Aus Fig. 2 läßt sich deutlich erkennen, wie die Kraftmeßvorrichtung 10 unter Einwirkung horizontaler Kräfte bzw. von Kräften reagiert, die ein Schwenken um eine horizontale Achse verursachen. Eine ähnliche Wirkung kann durch einen Versatz der zentralen Achse oder durch Toleranzen in dem krafteinleitenden Element oder ein Verdrehen um eine vertikale Achse hervorgerufen werden. Während die axiale Elastizität der Schraubenfeder 18 eine asymmetrische Verformung des Blocks 14 in axialer Richtung zuläßt, verhindert die Feder 18 ein seitliches Auseinanderquellen des Blocks 14. Es wird somit eine erhebliche Steifheit in senkrechter Richtung erzielt, während eine horizontale Flexibilität und eine solche in Schwenk- und Drehrichtung vorhanden ist. Ferner ist zu beachten, daß aufgrund der Elastizität des Blocks 14 und der Schraubenfeder 18 eine Rückstell- oder Gegenkraft ausgeübt wird mit der Tendenz, die Platte 12 in Normallage, also axial ausgerichtet und planparallel zur Platte 16 zu bringen.

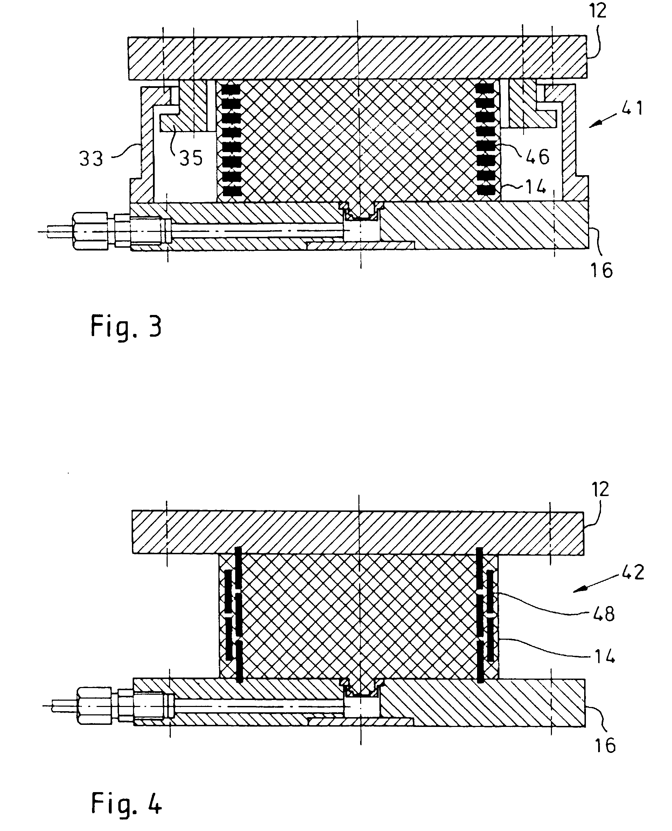

In Fig. 3 ist ein Ausführungsbeispiel einer Kraftmeßvorrichtung 41 dargestellt, die sich aus Abwandlung des Ausführungsbeispiels nach den Fig. 1 bzw. 2 ergeben.

Die Abwandlung betrifft insbesondere die Ausbildung des Korsetts. An die Stelle der Schraubenfeder 18 tritt eine größere Anzahl von in geringem Abstand voneinander in Übereinanderanordnung im Block 14 eingebetteten flachen Ringen 46.

An dieser Stelle sei etwas näher auf die spezielle Ausbildung des Korsetts und seine Einbettung in dem Block 14 eingegangen.

Zunächst sei darauf hingewiesen, daß das Korsett fest haftend in dem elastomeren Material zumindest zu einem größeren Teil eingebettet ist, was insbesondere dadurch erreicht werden kann, daß das bevorzugt aus Metall bestehende Korsett in das elastomere Material fest haftend einvulkanisiert ist, wobei das feste Haften dadurch erreicht wird, daß das Metall vor dem Vulkanisieren mit einem entsprechenden Primer oder einem anderen Benetzungsmittel überzogen wird. Dieses feste Haften verhindert, daß das Korsett bei Kraftübertragung aus dem elastomeren Material herausgequetscht wird. Es ergibt sich somit eine Kolben-/Zylinderanordnung mit definiertem gleichbleibendem Querschnitt.

Von weiterer Bedeutung ist ferner die Form und Dimensionierung der zwischen den benachbarten Federwindungen bzw. Ringen vorhandenen Schlitze, die mit elastomerem Material gefüllt sind. Je länger und je enger diese Schlitze sind, um so größer wird die Steifigkeit des Kraftübertragungselements. So kann die Steifigkeit und damit auch die Belastung beim Ausführungsbeispiel nach Fig. 1 dadurch erhöht werden, daß der Drahtquerschnitt der Schraubenfeder 18 durch einen rechteckigen Querschnitt wie bei dem Korsett des Ausführungsbeispiels der Fig. 3 ersetzt wird. Aus Fertigungsgründen kann es erforderlich bzw. zweckmäßig sein, die Ringe 46 in einer kammartigen Form an ihren Außenenden zu halten, wobei dann die Einbettung der Ringe im elastomeren Block 14 nicht vollständig, jedoch für die Zwecke der Erfindung sehr gut ist.

Wie in Fig. 3 angedeutet, können bei allen Ausführungsbeispielen Begrenzungsvorrichtungen für die relative Bewegung zwischen dem Krafteinleitungselement, nämlich obere Platte 12, und dem Kraftaufnahmeelement, nämlich untere Platte 16, vorgesehen sein.

Fig. 3 zeigt eine Ausführungsform einer Begrenzungsvorrichtung mit einem unteren umlaufenden Höhen- und Seitenbegrenzungsanschlag 33 in Rohrform mit oberem Innenflansch, wobei die Oberkante gleichzeitig als Anschlag für eine vertikale Überlastung dient. Als Gegenstück ist an der Unterseite der Platte 12 ein oberer Höhen- und Seitenbewegungsanschlag 35 komplementär dazu befestigt, wobei die gegenseitige Anordnung derart getroffen ist, daß ein gewisses seitliches Spiel (und eine Verdrehmöglichkeit) sowie ein gewisses Spiel für die Bewegung der Platte 12 nach oben gegeben ist.

Es sei darauf hingewiesen, daß im Vergleich zu den vorhergehend beschriebenen Ausführungsformen die obere Platte 12 weggelassen werden kann. Dies veranschaulicht die Vielseitigkeit der Anwendung. Auf die Oberseite des Blocks 14 kann eine beliebige Einheit oder Vorrichtung aufgesetzt werden, die die Deckfläche des Blocks 14 abdeckt. Bevorzugt wäre auch hierbei ein Anvulkanisieren der Deckfläche des Blocks 14 an der Unterseite dieser Einheit oder Vorrichtung zweckmäßig.

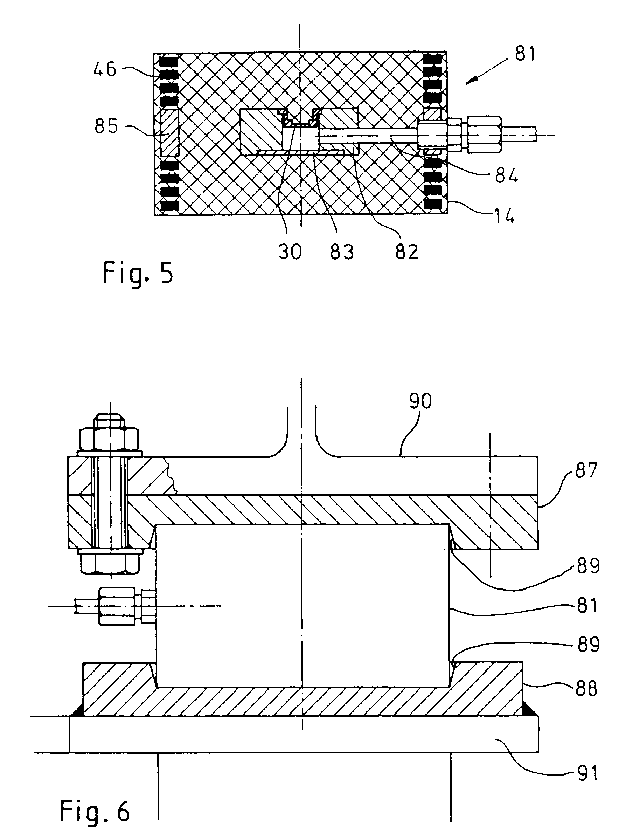

Bei der Ausführungsform nach Fig. 4 treten an die Stelle der Schraubenfeder 18 zwei zueinander konzentrische und versetzte Reihen von Ringen 48, die eine eher rohrförmige Ausbildung haben mit geringem Abstand voneinander, derart, daß wie bei dem Ausführungsbeispiel nach Fig. 1 bzw. 2 die notwendige Flexibilität gegeben ist. Wie in Fig. 4 angedeutet, kann das erfindungsgemäße Korsett an der oberen und/oder unteren Platte 12 bzw. 16 befestigt sein. Alternativ dazu oder zusätzlich haftet der Block 14 fest an den Kontaktflächen der oberen bzw. unteren Platte 12, 16, was durch Vulkanisation nach entsprechender Primervorbehandlung erzielt werden kann.

Durch die überlappende Anordnung der Ringe 48 ergibt sich eine extreme Verlängerung der Schlitzlänge und somit eine besondere Steifigkeit und praktisch vollkommene Einspannung des elastomeren Materials des Blocks 14, was extrem hohe Belastungen gestattet.

Obwohl bei den vorstehend beschriebenen Ausführungsbeispielen ein keramischer Topfsensor verwendet wird, lassen sich auch beliebige andere Drucksensoren bei entsprechender Gestaltung der Öffnung 26 einsetzen. Auch andere Ausführungsformen des Korsetts sind möglich, etwa ein den Block 14 eng einfassendes, nicht dehnbares Fasergewebe aus Metall, Glas, Kohlenstoff oder Kunststoff oder eine Art Schlauch mit entsprechender Versteifung. Insbesondere für hohe Kräfte werden die Platten 12 und 16 aus Metall gefertigt sein, bei niedrigeren Kräften käme auch eine Ausführung in Keramik oder einem anderen formbeständigen Material in Frage. Beispielsweise könnte an der Öffnung 26 auch eine Kraftmeßkerze gemäß der Europäischen Patentanmeldung EP-A-91 100 006.5 angesetzt werden, oder es wird an der Unterseite ein Drucksensor angeflanscht, dessen Membran bzw. anderes Druckaufnahmeelement die Öffnung 26 überdeckt.

Die Fig. 5 bis 9 zeigen Ausführungsformen erfindungsgemäßer Kraftmeßvorrichtungen, bei denen der Drucksensor 30 in den Block 14 eingebettet ist.

Insbesondere zeigt Fig. 5 eine Kraftmeßvorrichtung 81, in der ein formbeständiger Ringkörper 82 mit Abdeckplatte 83 einschließlich des von ihm gestützten Drucksensors 30 in den Block 14 einvulkanisiert ist, wobei wiederum die Kontaktflächen zum elastomeren Material fest anhaften. Ein Rohr 84 entsprechend dem Rohr 32 der Fig. 1 führt, etwa gehalten durch einen einvulkanisierten Ring 85, aus dem Block 14 heraus. Da der Ring 85 zwischen oberen und unteren Ringen 46 angeordnet ist, bleibt die Elastizität des Blocks 14 erhalten.

Beim Ausführungsbeispiel nach Fig. 5 ist zu beachten, daß sowohl die obere als auch die untere Platte 12 bzw. 16 fehlen, so daß sich diese Kraftmeßvorrichtung 81 in beliebiger Weise zwischen zwei Elemente einsetzen läßt, wie dies in Fig. 6 veranschaulicht ist. Die beiden einfassenden Elemente sind beispielsweise Platten 87 und 88, die mit dem Querschnitt der Kraftmeßvorrichtung 81 entsprechenden Vertiefungen 89 versehen sind. Ein Anwendungsbeispiel wäre die Abstützung eines Maschinenfußes 90 auf einem Fundament 91.

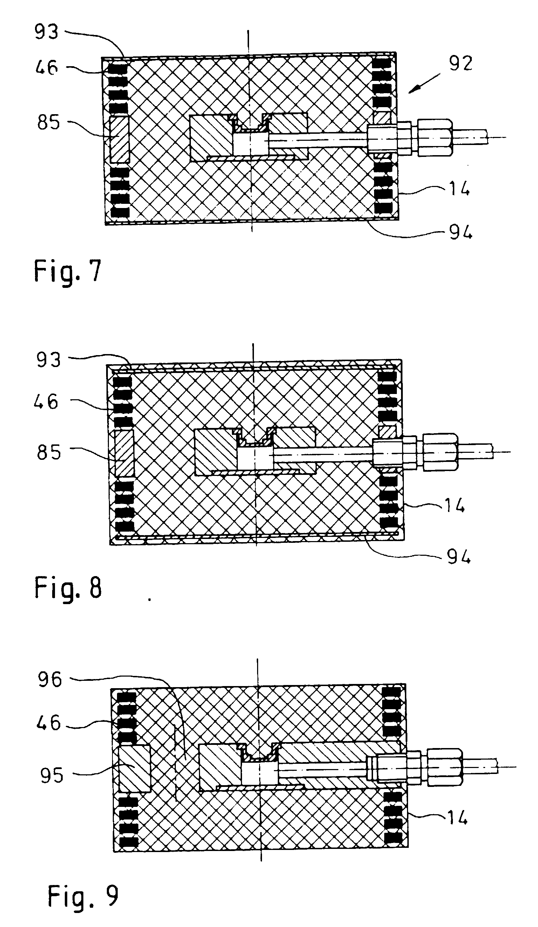

Das Ausführungsbeispiel nach Fig. 7 zeigt eine Kraftmeßvorrichtung 92, die gegenüber dem Ausführungsbeispiel nach Fig. 5 dahingehend abgewandelt ist, daß die obere und/oder untere Deckfläche mit einer dünnen Platte 93 bzw. 94, etwa aus Metall, abgedeckt ist, wobei die Platte(n) am Block 14 anvulkanisiert sind.

Eine Abwandlung dieser Ausführungsform zeigt Fig. 8, bei der die Platten 93 bzw. 94 im Block 14 einvulkanisiert sind.

Fig. 9 zeigt eine weitere Modifikation der Ausführungsbeispiele der Fig. 5 bis 8 dahingehend, daß anstelle des Ringes 85 eine Platte 95 aus formbeständigem Material, etwa Metall, Keramik oder Kunststoff in Block 14 einvulkanisiert ist, die umfangsmäßig verteilt mit Öffnungen 96 versehen ist, so daß das elastomere Material des Blocks 14 oberhalb und unterhalb der Platte 95 in direkter Druckübertragung steht, da die Öffnungen mit elastomerem Material gefüllt sind.

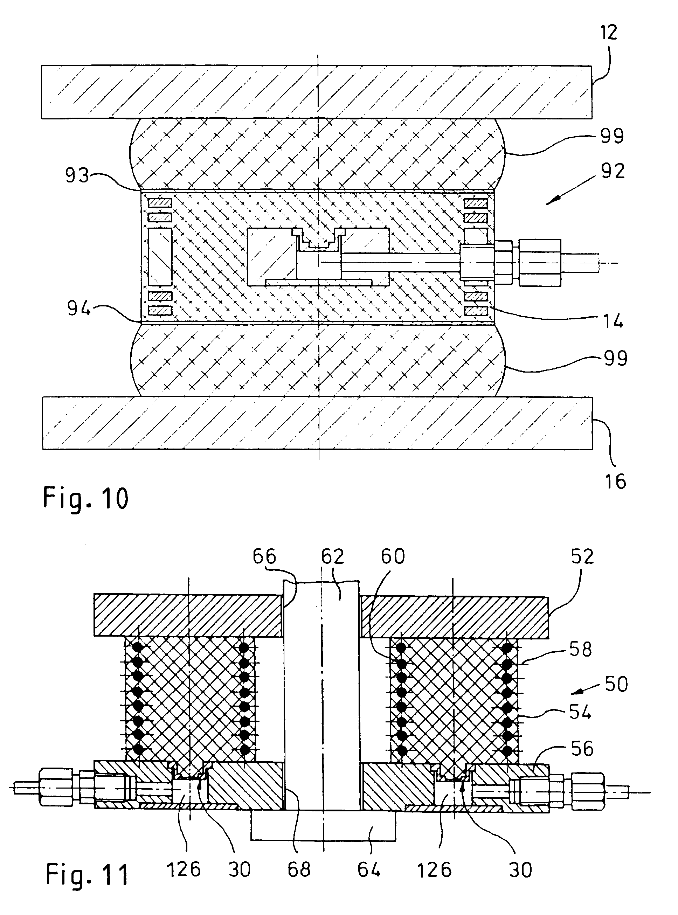

Fig. 10 zeigt ein weiteres abgewandeltes Ausführungsbeispiel, das besonders geeignet ist bei großen Stoßbelastungen und größeren Schrägstellungen der Platte 12 gegenüber der Platte 16. Lediglich beispielsweise wird hierbei die Kraftmeßvorrichtung 92 nach Fig. 7 verwendet und zwischen den Platten 12 und 16 unter jeweiliger Einfügung eines Elastomerpolsters 99 oben und unten angeordnet. Die Flächen der Elastomerpolster 99 haften wiederum fest an den Kontaktflächen mit den Platten 12, 16 bzw. 93, 94. Als weitere Modifikation ist daran zu denken, die Platten 93 und 94 wegzulassen und die Polster 99 in den Elastomerblock 14 zu integrieren.

Diese Ausführungsbeispiele ergeben ein Gummimetallelement mit integrierter Kraftmeßvorrichtung, das überall dort als Auflage oder Zwischenlage verwendet werden kann, wo auf die abgestützte Vorrichtung wirkende Kräfte, Momente, Schwingungen od. dgl. gemessen werden sollen.

Fig. 11 zeigt ein weiteres Ausführungsbeispiel der Erfindung mit einer ringförmig ausgestalteten Kraftmeßvorrichtung 50, die prinzipiell unter Verwendung der Merkmale der vorstehend beschriebenen Ausführungsbeispiele aufgebaut ist.

Bei dieser Kraftmeßvorrichtung 50 besitzen die obere und untere Platte 52 bzw. 56 zentrale Öffnungen 66 bzw. 68, durch die eine mit einem Kopf 64 versehene Kolbenstange 62 geführt ist.

Ein Block 54 aus elastomerem Material ist in diesem Falle ringförmig ausgebildet, wobei die äußere und innere Umfangsfläche begrenzt wird durch eine äußere bzw. eine innere Spiralfeder 58 bzw. 60.

Die untere Platte 56 kann dabei mit mehreren gleich beabstandeten Öffnungen 26 versehen sein, in die wiederum Drucksensoren 30 eingesetzt sind. Bei ungleichförmiger Kraftanwendung können an den Drucksensoren 30 unterschiedliche Drücke auftreten, aus denen sich dann durch Kombination der Meßwerte die tatsächliche Kraft feststellen läßt (vgl. Europäische Patentanmeldung EP-A-91 100 006.5).

Soll nur ein einziger Drucksensor 30 verwendet werden, dann läßt sich eine gleichförmige Druckverteilung und vollständige Druckübertragung dadurch erzielen, daß vorzugsweise in der Nähe des Drucksensors 30 in einem ringförmig verlaufenden Kanal 126 ein niedrigviskoses bis flüssiges Übertragungsmedium eingebracht wird (vgl. Europäische Patentanmeldung EP-A-0 440 012). Auch diese Maßnahme beeinflußt die Steifigkeit bzw. Elastizität des Kraftübertragungselements.

Beim Ausführungsbeispiel nach Fig. 12 ist die Anordnung nach Fig. 11 im Sinne der Ausführungsform nach Fig. 9 abgewandelt mit einer Platte 97, die der Platte 95 entspricht, wobei ein oder umfangsmäßig verteilt mehrere Drucksensoren 30 in entsprechenden Öffnungen angeordnet sind, während andere Öffnungen 96 mit elastomerem Material gefüllt sind.

Obwohl vorstehend verschiedene Variationen und Modifikationen von einzelnen Ausführungsbeispielen von Kraftmeßvorrichtungen erläutert wurden, lassen sich die aufgezeigten Merkmale auch in beliebigen anderen Kombinationen für Kraftmeßvorrichtungen verwenden, die an die verschiedensten Anwendungen angepaßt werden können.

Zur Herstellung der erfindungsgemäßen Kraftmeßvorrichtungen werden beispielsweise zunächst die Platten 12, 16 bzw. 52, 56 vorgefertigt, dann die Drucksensoren 30 in die Öffnungen 26 eingesetzt. Nun wird in einer für den Block 14 bzw. 54 passenden Gießform das mit einem Benetzungsmittel vorbehandelte Korsett, z. B. die Schraubenfeder 18, angeordnet und die Form mit der vorbereiteten, vorzugsweise flüssigen Materialmischung für das elastomere Material gefüllt, etwa eingegossen, eingespritzt, eingepreßt oder dgl. und das Material verfestigt, etwa ausgehärtet, abgebunden, vulkanisiert, etc., was vom verwendeten Ausgangsmaterial abhängt. Gegebenenfalls kann das Vulkanisieren des elastomeren Materials an der Platte 16 bzw. 56 durch Wärmeanwendung auf die Platte 16 bzw. 56 während oder nach der Aushärtung erreicht bzw. beschleunigt werden. Alternativ zu dem Gießen des Blocks 14 kann dieser auch von einer vorgefertigten Stange abgelängt werden. Bei dem Gießen bzw. Vorfertigen ist darauf zu achten, daß jede Blasenbildung vermieden wird (vgl. z. B. EP-PS 205 509).

Die obere Platte 12 bzw. 52 wird entweder nach dem Aushärten, vorzugsweise aber bereits nach dem Einfüllen des Materials aufgesetzt. Alternativ dazu kann die obere Platte 12 bzw. 52 auch bereits vor dem Einfüllen des Materials aufgesetzt sein, wobei dann in der Platte Öffnungen zum Austreten der vom einfließenden Material verdrängten Luft vorgesehen sind.

Wird als elastomeres Material ein Kunststoff verwendet, so läßt sich dessen Härte je nach Zusammensetzung in weiten Grenzen variieren, so daß auch Shore-Härten bis zu 200 erzielbar sind.

In diesem Zusammenhang sei darauf hingewiesen, daß der Block 14 bzw. das erfindungsgemäße Kraftübertragungselement auch als solches in beliebigem Zusammenhang einsetzbar ist und zwar überall dort, wo bei der Kraftübertragung zu einem Meßelement die eingangs erwähnten Einflüsse ausgeschaltet werden sollen.

Die vorstehend beschriebenen Ausführungsbeispiele sind prinzipieller Art. Die erfindungsgemäße Maßnahme, nämlich einen in ein Korsett eingefaßten elastomeren Block zur Kraftübertragung zu verwenden, läßt sich bei den verschiedensten Kraftmeßvorrichtungen anwenden, wie sie beispielsweise in folgenden Druckschriften im einzelnen erläutert sind: EP 0 145 001, EP 0 205 509, EP-A-0 302 437, DE-OS 38 18 126 und EP-A-0 468 399.

Ein mit Vorzug verwendbarer keramischer Drucksensor ist näher beschrieben in den Druckschriften EP-A-0 333 091, EP-A-0 394 632 und EP-A-0 440 012.

Eine besondere Ausführungsform ergibt sich bei flächigen Kraftmeßvorrichtungen, etwa Plattformwaagen (vgl. EP-A-0 145 001). Hier wird zwischen zwei verhältnismäßig großen planparallelen Platten in eine Elastomerschicht eine größere Anzahl von Drucksensoren eingebettet, wobei die Elastomerschicht wiederum umfangsmäßig mit einem Korsett gefaßt wird, das ein Herausquellen des Elastomers verhindert.

Nachstehend werden nun Ausführungsbeispiele erläutert, bei denen statt eines Korsetts ein Mantel verwendet wird.

Fig. 13 entspricht Fig. 1 und zeigt eine Kraftmeßvorrichtung 110 mit einer oberen und einer unteren Platte 12 bzw. 16, zwischen denen ein Kraftübertragungselement aus elastomerem Material in Form eines Blocks 114 angeordnet ist, der umfangsmäßig von einem Mantel, etwa einem Balg 118 umgeben ist, wobei dieser Mantel aus einem sich praktisch in Querschnittsrichtung nicht dehnenden Material besteht, während er in allen anderen Richtungen elastisch nachgebend ist.

Fig. 14 zeigt eine gegenüber der Form nach Fig. 13 geringfügig abgewandelte Ausführungsform einer Kraftmeßvorrichtung 110. Insbesondere ist hierbei die Platte 12 durch einen Ring 142 ersetzt, der eine innere Platte 149 unter Bildung eines engen Ringspalts 148 umgibt. Der Ringspalt 148 ist mit elastomerem Material gefüllt, das fest an den Kontaktflächen haftet und so die Platte 149 mit dem Ring 142 verbindet. Der Ring 142 steht dabei in ortsfester, starrer Beziehung mit der Bodenplatte 16. Die senkrechte Führung der inneren Platte 149 durch das elastomere Material im Ringspalt 148 gewährleistet, daß ein Großteil von etwaigen Querkräften abgeleitet wird und nur restliche Querkräfte durch das Kraftübertragungselement, also den Block 114 zu kompensieren sind.

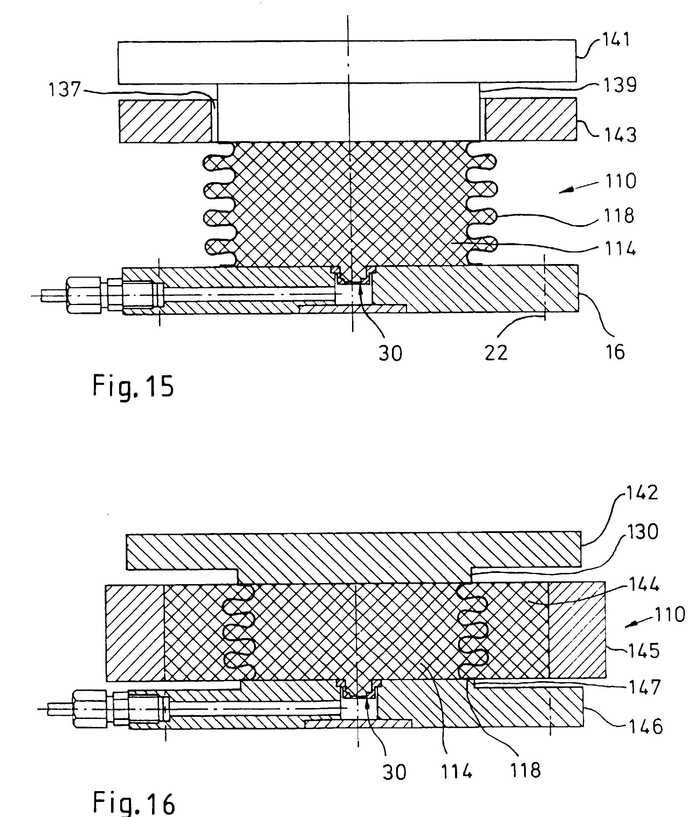

Fig. 15 zeigt eine Ausführungsform, bei der eine Begrenzung einer seitlichen Bewegung einer Deckplatte 141 relativ zur Bodenplatte 16 durch einen Ring 143 erfolgt, der starr mit der Bodenplatte 16 verbunden ist. Der Ring 143 besitzt eine zentrale Öffnung 137, in die mit größerem Spiel ein Stempel 139 eingeführt ist, dessen untere Stirnseite mit dem Block 114 und dem Balg 118 verbunden ist und der an der Unterseite der Deckplatte 141 angebracht ist.

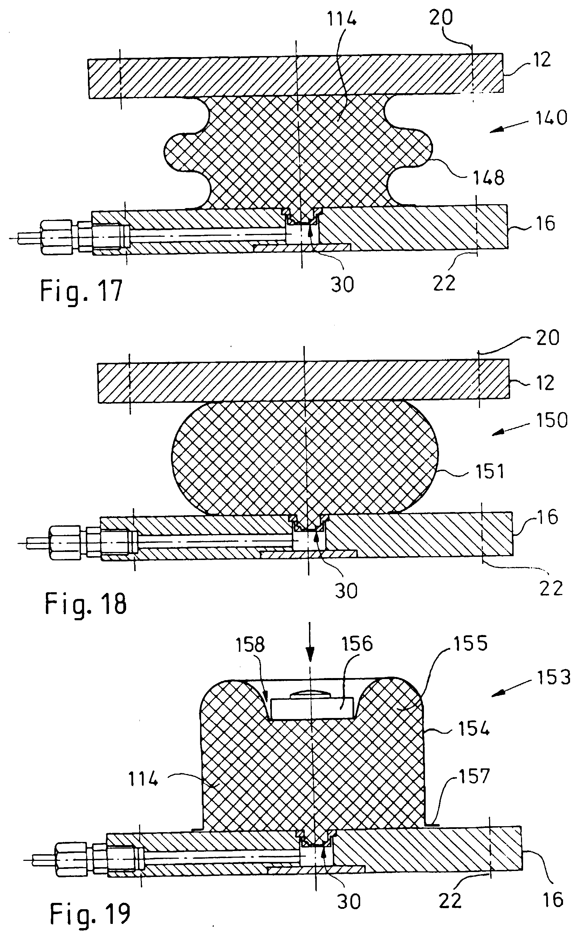

Fig. 16 zeigt eine abgewandelte Ausführungsform, bei der der in den Balg 118 gefaßte Block 114 von außen noch dadurch elastisch gestützt wird, daß der Balg 118 von weiterem elastomerem Material 144 umgeben ist, das fest an der Innenseite eines das Material 144 umgebenden Rings 145 haftet.

Die obere Platte 12 (Fig. 13) ist ersetzt durch eine Deckplatte 142, an deren Unterseite ein Stempel 130 angebracht ist, der umfangsmäßig dem mittleren Durchmesser des Balges 118 entspricht. Die aneinanderliegenden Stirnflächen des Blocks 114 bzw. des Stempels 130 sind in fester Haftverbindung miteinander, wie dies übrigens auch bei den mit dem elastomeren Material des Blocks 114 in Kontakt befindlichen Metallflächen der Platten 12 und 16 der Fall ist.

Die Bodenplatte 16 beim Ausführungsbeispiel der Fig. 13 ist beim vorliegenden Ausführungsbeispiel der Fig. 16 ersetzt durch eine Bodenplatte 146, die ebenfalls einen erhabenen Stempel 147 mit einem Außendurchmesser aufweist, der dem mittleren Durchmesser des Balges 118 entspricht.

Diese Ausführungsform hat den Vorteil, daß der Balg 118 von außen gestützt wird, so daß bei entsprechender Kompensation von Querkräften auch große Kräfte angelegt bzw. übertragen werden können.

In den Fig. 17, 18 und 19 sind Ausführungsbeispiele von Kraftmeßvorrichtungen 140, 150 und 153 dargestellt, die sich aus Abwandlungen des Ausführungsbeispiels nach Fig. 13 bis 16 ergeben.

Die Abwandlung betrifft die Ausbildung des Mantels. An die Stelle des Balges 118 mit einer größeren Anzahl von Wülsten tritt ein Mantel 148 mit nur einer Wulst (Fig. 17) bzw. ein Mantel 151, der eine gekrümmte, insbesondere kreisförmige Außenkontur aufweist (Fig. 18).

Das Ausführungsbeispiel nach Fig. 19 ist noch weiter dahingehend abgewandelt, daß die Deckplatte 12 wegfällt und ein Mantel 154 derart geformt ist, daß er die Aufgabe der Deckplatte 12 (Fig. 16) übernimmt. Während bei den zuvor beschriebenen Ausführungsbeispielen der Mantel eine im Prinzip zylindrische Ausbildung mit oben und unten offenen Stirnenden aufweist, ist der Mantel 154 des Ausführungsbeispiels nach Fig. 19 an seiner oberen Stirnseite abgeschlossen. Lediglich beispielsweise ist hier die Form einer zentralen Vertiefung 158 mit umlaufender Rundwulst 155 gewählt, in die ein Krafteinleitungselement 156 eingesetzt sein kann.

Die untere Kante 157 ist umlaufend an der Bodenplatte 16 in geeigneter Weise befestigt, etwa durch Schweißen, Kleben oder Schrauben, was übrigens auch bei allen anderen Ausführungsbeispielen der Fall sein kann.

An dieser Stelle sei etwas näher auf die Eigenschaften des Mantels und seine Verbindung mit dem Block 114 eingegangen. Wie gesagt, soll der Balg 118 bzw. der Mantel 148, 151, 154 derart beschaffen sein, daß er sich in Querschnittsrichtung nicht ausdehnt, während er in anderen Richtungen vorzugsweise federnd elastisch ist. Als Material kommt dabei Metall, ein Gewebe aus nicht dehnbaren Fasern oder Kunststoff oder ein Schlauch in Frage, die mit entsprechenden Einlagen verstärkt sind.

Das elastomere Material des Blocks 114 soll fest an der Oberfläche des Balgs bzw. Mantels haften und wird vorzugsweise anvulkanisiert. Das elastomere Material, etwa Natur- oder Silikonkautschuk, wird im wesentlichen blasenfrei in dem auf die Bodenplatte 16 aufgesetzten und daran befestigten Balg bzw. Mantel eingefüllt, etwa unter Anwendung von Vakuum, oder es wird ein Blasenentfernungsverfahren angewandt, wie es beispielsweise in der EP-PS 0 145 001 beschrieben ist. Es ergibt sich somit eine Kolben-/Zylinderanordnung mit definiertem, gleichbleibendem Querschnitt.

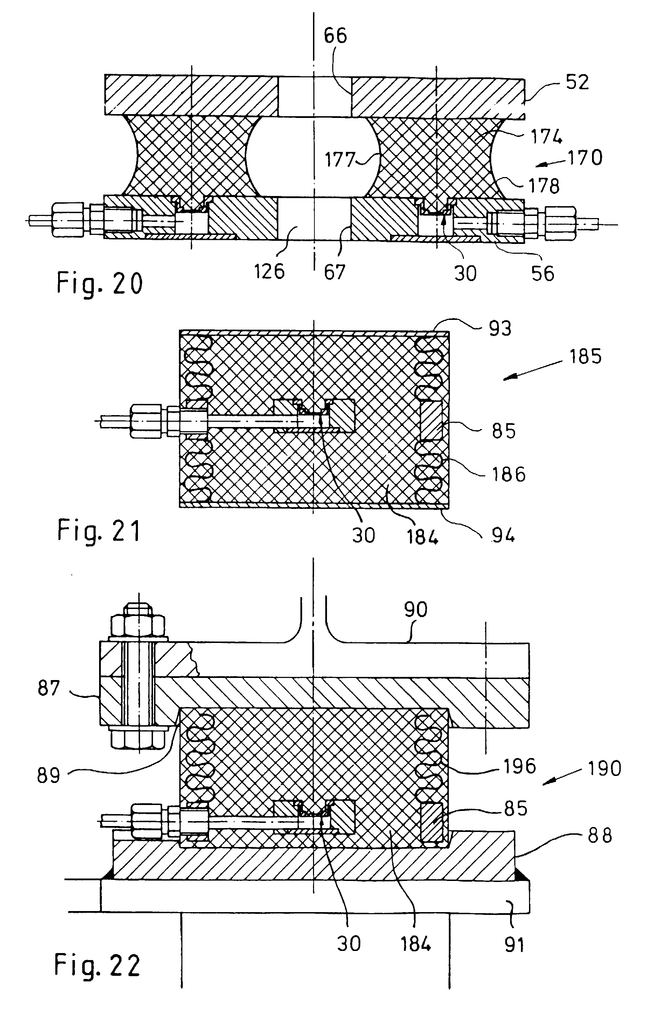

Fig. 20 zeigt ein weiteres Ausführungsbeispiel der Erfindung mit einer ringförmig ausgestalteten Kraftmeßvorrichtung 170, analog der Kraftmeßvorrichtung 50 der Fig. 11. Ein Block 174 aus elastomerem Material ist in diesem Falle ringförmig ausgebildet, wobei die äußere und innere Umfangsfläche begrenzt wird durch einen inneren und einen äußeren Mantelring 177, 178 oder einen anderen Mantel gemäß den Fig. 13, 17 oder 18. Die Vorrichtung 185 nach Fig. 21 mit Balg 186 entspricht der Vorrichtung nach Fig. 7.

Die Fig. 22 zeigt eine Ausführungsform einer erfindungsgemäßen Kraftmeßvorrichtung 190, bei der der Drucksensor 30 in einen Block 184 aus elastomerem Material eingebettet ist, analog den Fig. 5 und 6, wobei der Ring 85 im unteren Bereich des elastomeren Blocks 184 angeordnet und nur ein Balg 196 eingebettet ist.

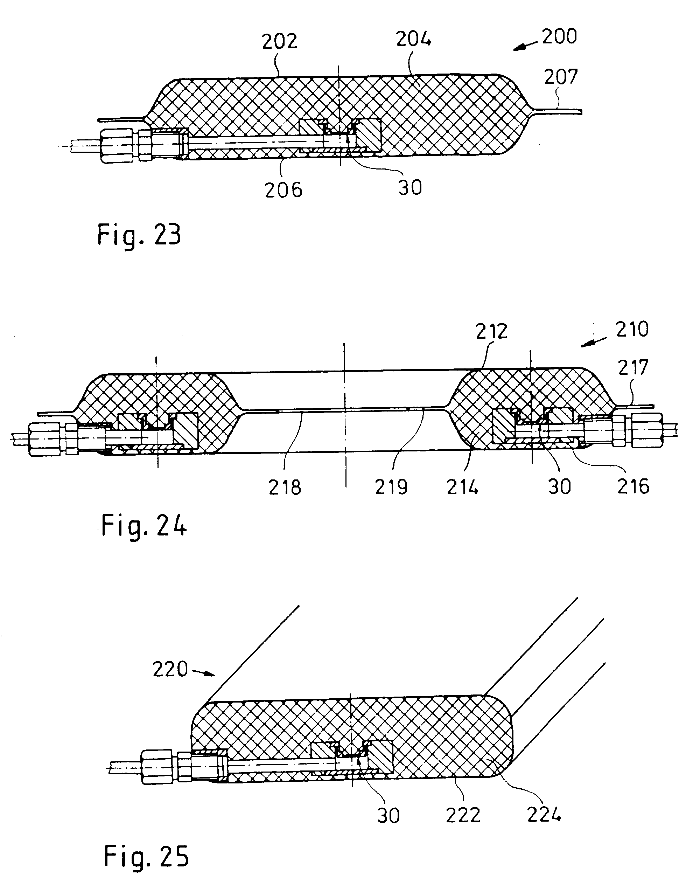

Die Fig. 23 bis 25 zeigen eine weitere Ausführungsform der Erfindung mit Modifikationen, die sich auf eine besonders kompakte, insbesondere flache, selbständige bzw. selbsttragende Kraftmeßvorrichtung beziehen.

Die Fig. 23 zeigt eine Kraftmeßvorrichtung 200 mit einem flachen Block 204 aus elastomerem Material, der zwischen zwei Halbschalen 202 und 206 eingefaßt ist, die an seitlich überstehenden Rändern 207 in geeigneter Weise, etwa durch Schweißen, Kleben, Fügen oder Nieten miteinander verbunden sind.

In Draufsicht kann die Scheibe kreisförmig sein oder auch eine beliebige andere Form aufweisen. Der Drucksensor 30 ist wiederum in dem Block 204 eingebettet.

Der Vorteil dieser Ausführungsform ist der einfache Einsatz und die günstige Fertigung. Um den Block 204 mit eingegossenem Drucksensor 30 werden die Halbschalen 202, 206 gelegt und umfangsmäßig am Rand 207 zusammengepreßt und dort verbunden. Im Einsatz wird die flache Vorrichtung auf eine ebene Unterlage gelegt und steht sofort zur Messung zur Verfügung. Sie läßt sich bequem unter jeden Gegenstand schieben, dessen Masse bestimmt werden soll.

Bei der abgewandelten Ausführungsform nach Fig. 24 ist eine Kraftmeßvorrichtung 210 ringförmig ausgebildet, wobei ein ringförmiger elastomerer Block 214 von entsprechend geformten Halbschalen 212, 216 umgeben ist, die am Außenrand 217 und an einem Innenrand 219 miteinander verbunden sind. Der Innenrand 219 kann eine zentrale Öffnung 218 offenlassen. Bei dieser Ausführungsform können mehrere Drucksensoren 30 umfangsmäßig vorzugsweise gleichmäßig verteilt angeordnet werden. Andererseits besteht auch hier die Möglichkeit, mit nur einem Drucksensor 30 zu arbeiten und zur einwandfreien Druckübertragung im Block 214 einen Ring aus Flüssigkeit oder niedrigviskosem Material anzuordnen.

Fig. 25 zeigt eine bandartige Ausführungsform einer Kraftmeßvorrichtung 220, bei der ein streifen- oder bandförmiger Block 224 aus elastomerem Material von einem Mantel 222 umgeben ist. Über die Länge der Vorrichtung können mehrere Drucksensoren 30 in vornehmlich gleichem Abstand voneinander verteilt sein. Eine derartige bandförmige Kraftmeßvorrichtung 220 läßt sich beispielsweise zur Achslastbestimmung von Fahrzeugen quer zu deren Fahrtrichtung legen bzw. im Boden versenken. Bei entsprechender Elastizität und Empfindlichkeit kann eine derartige bandförmige Kraftmeßvorrichtung 220 zur Füllstandsanzeige in Silos oder anderen Großbehältern dienen, in die das Band eingetaucht wird.

Andere Ausführungsformen des Mantels sind möglich, etwa ein den Block 224 eng einfassendes, nicht dehnbares Fasergewebe aus Metall, Glas, Kohlenstoff oder Kunststoff oder eine Art Schlauch mit entsprechender Versteifung.

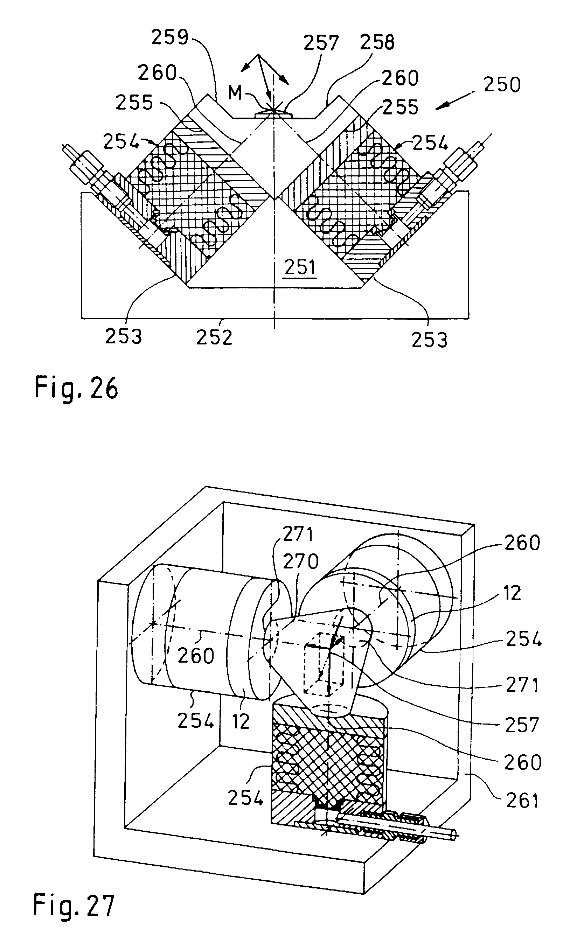

Fig. 26 zeigt eine Ausführungsform einer Kraftmeßeinheit 250, die verdeutlicht, wie das erfindungsgemäße Prinzip mit Vorteil für eine mehrdimensionale Kraftmessung eingesetzt werden kann.

Im einzelnen ist für die beispielsweise zweidimensionale Messung eine Basis 252 vorgesehen mit einer zentralen, vornehmlich viereckpyramidenstumpfförmigen Vertiefung mit zwei sich gegenüberliegenden Schrägflächen 253, auf denen sich je eine Kraftmeßvorrichtung 254, beispielsweise ähnlich denjenigen nach den Fig. 21 oder 22 abstützt. Bei der vorzugsweise, jedoch nicht notwendigerweise symmetrischen Anordnung sind die Schrägflächen 253 zueinander unter einem beliebigen, jedoch vorzugsweise annähernd rechten Winkel angeordnet. Die Krafteinleitung erfolgt über ein Krafteinleitungselement 258, dessen dachförmig zueinander verlaufende Flächen 255 gegen die oberen Flächen der Kraftmeßvorrichtungen 254 anliegen; die Flächen 255 stehen jeweils senkrecht auf den Richtungsvektoren der jeweils zu messenden Kraftkomponenten. Beim Ausführungsbeispiel bilden sie einen rechten Winkel miteinander.

Das Krafteinleitungselement 258 besitzt beispielsweise die Form eines Dreieckprismas, wobei auf der nach oben gerichteten Basisfläche eine Vertiefung 259 vorgesehen sein kann, auf deren horizontal, d. h. zu den Flächen 255 unter 45° verlaufendem Boden eine Krafteinleitungskalotte 257 befestigt sein kann.

Wie durch die Kraftpfeile angedeutet, werden auf die Krafteinleitungskalotte 257 ausgeübte Kräfte auf die beiden Kraftmeßvorrichtungen 254 verteilt, so daß sich nicht nur deren Größe sondern auch deren Richtung feststellen läßt. Bei einer zweidimensionalen Anordnung werden Kräfte bzw. Kraftkomponenten gemessen, deren Vektoren in einer Ebene verlaufen, in der sich auch die Zentralachsen 260 der Kraftmeßvorrichtungen 254 erstrecken.

Es ist ersichtlich, daß die beiden Kraftmeßvorrichtungen 254 nicht symmetrisch angeordnet sein müssen. Ferner erkennt man, daß eine Erweiterung auf eine dreidimensionale Messung ohne weiteres dadurch möglich ist, daß man anstelle einer Viereckpyramidenstumpf-Vertiefung 259 einen dreieckigen Querschnitt wählt und drei Kraftmeßvorrichtungen 254 mit jeweils 120° Winkelversetzung anordnet.

Fig. 27 zeigt eine alternative Ausführungsform einer dreidimensionalen Kraftmeßeinheit, wiederum unter Verwendung von drei Kraftmeßvorrichtungen 254, die sich an den zueinander rechtwinkligen Wänden einer Basis 261 derart abstützen, daß vorzugsweise ihre zentralen Achsen 260 sich senkrecht zueinander verlaufend in einem Krafteinleitungspunkt 257 schneiden, wobei die beliebig gerichtete Kraft an einem Krafteinleitungselement 270 angreift, das über entsprechende Stirnflächen 271 gegen die jeweilige Platte 12 der entsprechenden Kraftmeßvorrichtung 254 anliegt. Im übrigen gelten die gleichen Gesichtspunkte wie sie zuvor bereits im Zusammenhang mit den zweidimensionalen Kraftmeßeinheiten diskutiert wurden.

Mit der erfindungsgemäßen Kraftmeßeinheit, z. B. nach Fig. 26, lassen sich auch Momente bzw. Momentkomponenten feststellen, die beispielsweise an einem Punkt M angreifen, der sich als Schnittpunkt der zentralen Längsachsen der Kraftmeßvorrichtungen 254 ergibt. Konstruktiv könnte dazu das Krafteinleitungselement 258 durch ein Gerüst oder jeweils eine Stange ersetzt werden, die sich von der Krafteinleitungsseite jeder Kraftmeßvorrichtung 254 zum Schnittpunkt M hin erstreckt. Bei entsprechender Umrechnung in der Auswertevorrichtung kann der Kraft- bzw. Momentenangriffspunkt auch an einer beliebigen anderen Stelle liegen.

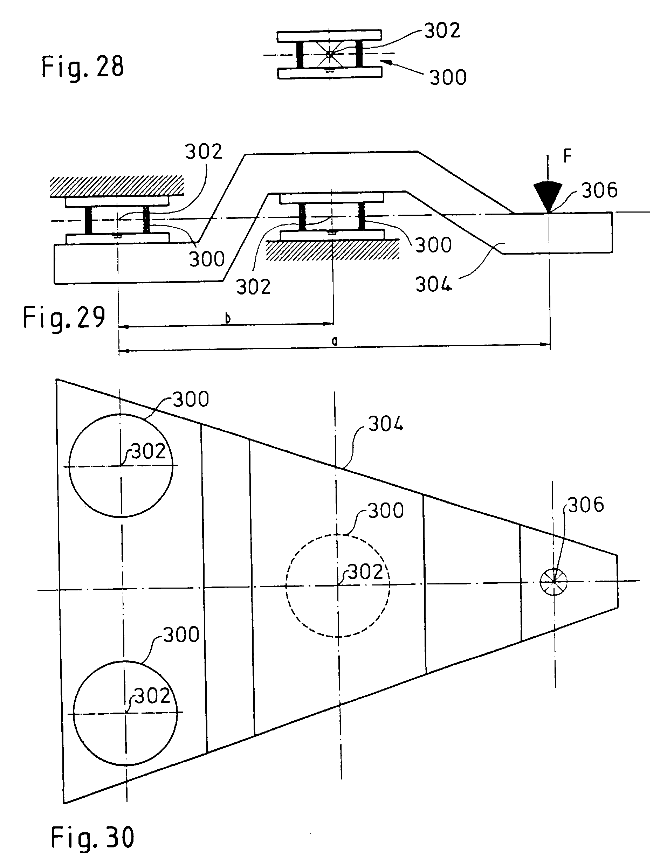

In diesem Zusammenhang wird auf die Fig. 28 bis 31 verwiesen, in denen das Prinzip der Momentenmessung anhand eines ein- bzw. zweiarmigen Hebels dargestellt ist.

Fig. 28 zeigt lediglich nochmals eine Kraftmeßvorrichtung 300 in einer beliebigen, zuvor erläuterten Ausführungsform, wobei nur beispielsweise eine Kraftmeßvorrichtung gemäß Fig. 1 angedeutet ist. Eine wesentliche Eigenschaft derartiger Kraftmeßvorrichtungen 300 ist, daß unabhängig von asymmetrischen Belastungen ein Volumenschwerpunkt des Blocks 14 (Fig. 1) gegeben ist, wobei dieser Punkt 302 als virtueller Drehpunkt wirkt und seine Lage praktisch nicht verändert. Dies hat wiederum zur Folge, daß auch der Momentenarm, also der Abstand des Punktes 302 zum entfernt davon liegenden Kraftangriffspunkt, konstant bleibt, was eine genaue Momentenbestimmung ermöglicht.

Die Fig. 29 und 30 zeigen in ganz prinzipieller Darstellung eine Momentenbestimmungseinheit in Seitenansicht bzw. Draufsicht. Ein Balken 304, der nach Art eines Waagenbalkens mittig auf einer Kraftmeßvorrichtung 300 um deren Punkt 302 schwenkbar gelagert ist, stützt sich auf der einen Seite (in Fig. 29 links) gegen mindestens eine weitere Kraftmeßvorrichtung 300, vorzugsweise jedoch gegen zwei in Abstand zueinander und gleich weit vom Krafteinleitungspunkt entfernt angeordnete Kraftmeßvorrichtungen 300, in Richtung des Uhrzeigersinns ab, während eine Kraft F senkrecht von oben in einem Krafteinleitungspunkt 306 gegen den rechten Arm (Fig. 29) des Balkens 304 wirkt. Der Balken 304 ist dabei in der senkrechten Ebene derart gekrümmt, daß die Punkte 302 der Kraftmeßvorrichtungen 300 und vorzugsweise der Krafteinleitungspunkt 306 in einer (horizontalen) Ebene liegen. Da - wie zuvor erwähnt - die Punkte 302 aller Kraftmeßvorrichtungen 300 ihre Position nicht verändern, sind auch die Momentenarme a bzw. b konstant, so daß sich mit der mittleren Kraftmeßvorrichtung 300 die Größe der Kraft F und mit den äußeren Kraftmeßvorrichtungen 300 das durch die Kraft F um den Punkt 302 der mittleren Kraftmeßvorrichtung 300 wirkende Moment genau bestimmen läßt. Hierbei wirkt der Punkt 302 der mittleren Kraftmeßvorrichtung 300 als ein virtueller Drehpunkt für das angreifende Moment.

Alternativ zu der zweiarmigen Ausführung bzw. Lagerung des Balkens 304 ergibt sich eine einarmige Anordnung dadurch, daß die beiden in Fig. 29 bzw. 30 linken Kraftmeßvorrichtungen 300 in horizontalem Abstand zueinander, insbesondere ihre Punkte 302, als virtuelle Drehpunkte verwendet und mit der mittleren Kraftmeßvorrichtung die am Balken 304 im zentralen Punkt 302 angreifende Kraft gemessen wird. Unter der Annahme, daß a = 2b, würde eine Kraft 2F gemessen, d. h. daß das am virtuellen Drehpunkt wirkende Drehmoment gleich 2bF bzw. aF.

In diesem Zusammenhang sei darauf hingewiesen, daß das lediglich als virtueller Drehpunkt verwendete Element nicht als Kraftmeßvorrichtung ausgebildet sein muß, d. h. es kann der Drucksensor 30 (Fig. 1) ganz fehlen oder nicht angeschlossen sein.

Fig. 31 zeigt ein weiteres Ausführungsbeispiel, bei dem ein Motor 308 sich beidseitig auf je einer Kraftmeßvorrichtung 300 abstützt, wobei deren Punkte 302 einen konstanten Abstand D haben. Bei der mit Pfeil 303 angezeigten Drehrichtung des Motors im Gegenuhrzeigersinn wirkt die rechte Kraftmeßvorrichtung 300, insbesondere deren Punkt 302 als virtueller Drehpunkt, während mit der linken Kraftmeßvorrichtung 300 eine Kraft gemessen wird, die multipliziert mit D das am Motor 308 wirkende Drehmoment ergibt.

Es sei darauf hingewiesen, daß für derartige mehrdimensionale Kraftmeßeinheiten bzw. Momentmeßeinheiten nicht nur die Kraftmeßvorrichtung 10 gemäß Fig. 1 einsetzbar ist, sondern auch alle anderen Kraftmeßvorrichtungen der zuvor beschriebenen Ausführungsbeispiele.

Insbesondere ist darauf hinzuweisen, daß darüberhinaus Kraftmeßvorrichtungen einsetzbar sind, die anstelle des Mantels ein Korsett und umgekehrt aufweisen.

Schließlich sei noch erwähnt, daß etwa bei einer zu erwartenden sehr ungleichen Kräfteverteilung die Kraftmeßvorrichtungen 254 bzw. 300 nicht identisch sein müssen, sondern für unterschiedliche Kraftbereiche ausgelegt sein können, um die Genauigkeit der Messung zu verbessern.

Gerade das Anwendungsbeispiel einer mehrdimensionalen Kraftmeßeinheit 250 läßt deutlich den großen Vorteil der erfindungsgemäßen Kraftmeßvorrichtungen 254 etc. erkennen. Jegliche Schrägstellung des Krafteinleitungselements 258 wird ohne weiteres durch elastisches Ausweichen der Kraftmeßvorrichtungen 254 kompensiert.

Die Herstellung der Kraftmeßvorrichtungen mit Mantel entspricht derjenigen mit Korsett. Der Balg oder Mantel 118, 168 etc. wird innen mit einem Benetzungsmittel vorbehandelt, mit der vorbereiteten, vorzugsweise flüssigen Materialmischung für das elastomere Material gefüllt, etwa eingegossen, eingespritzt, eingepreßt oder dgl. und das Material verfestigt, etwa ausgehärtet, abgebunden, vulkanisiert, etc., was vom verwendeten Ausgangsmaterial abhängt. Dies kann durch Vakuumanwendung oder Schleudern erreicht werden. Bei den Ausführungsformen nach Fig. 21 und 22 erfolgt das Gießen in einer Form, in die der Balg oder Mantel eingesetzt wurde. Statt dem individuellen Gießen des Blocks kann dieser auch von einer vorgefertigten Stange abgelängt werden.

Abschließend sei nochmals auf Fig. 32 verwiesen, aus der aufgrund der vorstehenden Erläuterungen und Ausführungsbeispiele deutlich wird, mit welchem erheblichen Vorteil Kraftmeßvorrichtungen gemäß der Erfindung einsetzbar sind.

Bei Verwendung der erfindungsgemäßen Kraftmeßvorrichtung können Einflüsse aufgrund von Wärmedehnungen, Belastungsdurchbiegungen und Seitenkräften, etwa durch Wind und/oder Drehbewegungen um eine vertikale Achse, ausgeglichen werden.

Ähnliche Abstützungen können bei beliebigen anderen Einrichtungen erfolgen, bei denen eine Kraftmessung mit hoher Genauigkeit gewünscht ist, beispielsweise bei Brücken, Maschinen und dergleichen. Die Platten 12 und 16 können dabei auch eine beliebige andere Form besitzen, soweit die Stirnflächen des Blocks 14 vollständig abgedeckt sind.

## Patentansprüche

1. Kraftübertragungselement für Kraft- und/oder Momentmeßvorrichtungen mit einem Block (14;54;114;174;184;204;214;224) aus elastomerem Material, wobei der Block zur Übertragung von Kräften auf mindestens einen Kraft- oder Drucksensor (30) innerhalb des Blocks oder in Kontakt mit dessen elastomerem Material in axialer Kraftmeßrichtung verformbar, im dazu senkrechten Querschnitt jedoch nicht dehnbar, eng eingefaßt ist,
dadurch gekennzeichnet, daß
die als Mantel (118;148;151;154;177;178;186;196;202,206;212,216;222) oder Korsett (18;46;48;58,60) ausgebildete Einfassung in axialer Kraftmeßrichtung verformbar ist.

2. Kraftübertragungselement nach Anspruch 1, dadurch gekennzeichnet, daß der Mantel aus mindestens einem Balg (118;177,178;186;196) aus Metall, einem unelastischen Gewebe, Schlauch oder Kunststoff besteht oder der Mantel (148;151;154,202,206;212,216;222;226) aus Blechmaterial oder als Kunststoffschicht ausgebildet ist.

3. Kraftübertragungselement nach Anspruch 1, dadurch gekennzeichnet, daß das Korsett aus mindestens einer Schraubenfeder (18), aus voneinander beabstandeten, axial nebeneinander angeordneten Ringen (46) oder aus Reihen von konzentrisch zueinander in Abstand angeordneten Ringen (48) besteht.

4. Kraftübertragungselement nach einem der vorhergehenden Ansprüche, dadurch gekennzeichnet, daß die als Mantel, insbesondere als Balg (118;186;196), oder als Korsett (18;46;48;58,60) ausgebildete Einfassung, in dem elastomeren Material des Blocks (14,54;114,144;184) zumindest zu einem großen Teil eingebettet, insbesondere eingegossen ist.

5. Kraftübertragungselement nach Anspruch 4, dadurch
gekennzeichnet, daß
das elastomere Material fest an der Einfassung (118;148;151;154;177;178;186;196;202,206;212,216;222) haftet.

6. Kraftübertragungselement nach einem der vorhergehenden Ansprüche, dadurch gekennzeichnet, daß
der Block (184) an seiner Ober- und/oder Unterseite mit einer dünnen Metallplatte (93,94) abgedeckt ist.

7. Kraftübertragungselement nach einem der vorhergehenden Ansprüche, gekennzeichnet durch Bewegungsbegrenzungsvorrichtungen (33,35), die zwischen einem Krafteinleitungselement (12) und einem Kraftaufnahmeelement (16) angeordnet sind, zwischen denen der Block (14) gehalten ist.

8. Kraftübertragungselement nach einem der vorhergehenden Ansprüche, dadurch gekennzeichnet, daß
der Block (204;214;224) flach, insbesondere scheiben-, ring- oder bandförmig ausgebildet ist, wobei der Mantel aus zwei Teil-, insbesondere Halbschalen (202,206;212,216) besteht, die an einem Außenrand (207;217) miteinander verbunden sind.

9. Kraftmeßvorrichtung, gekennzeichnet durch die Verwendung eines Kraftübertragungselements nach einem der vorhergehenden Ansprüche, und ferner dadurch gekennzeichnet, daß der/die Drucksensor(en) (30) in dem Block (z.B. 14) eingebettet oder mit dem elastomeren Material desselben in engem Kontakt ist (sind), wobei der/die Drucksensor(en) (30) in einem formbeständigen Abstützkörper (82) gehalten ist (sind), der in den Block (z.B. 184) integriert ist.

10. Kraftmeßvorrichtung, gekennzeichnet durch die Verwendung eines Kraftübertragungselements nach einem der vorhergehenden Ansprüche, und ferner dadurch gekennzeichnet, daß die Kraftmeßvorrichtung (50;98;160;170;210) ringförmig ist, wobei der Block (54;174;214) aus elastomerem Material ringförmig ist und sowohl außen als auch innen umfangsmäßig in je einem Korsett (58,60) oder Mantel (177,178;212,216) eingefaßt ist.

11. Kraftmeßvorrichtung nach Anspruch 10, dadurch gekennzeichnet, daß der Block (54;174;214) zwischen einem plattenförmigen Krafteinleitungselement (52) und einem plattenförmigen Kraftaufnahmeelement (56) mit je einer zentralen Öffnung (66,68;219) angeordnet ist, wobei in dem Kraftaufnahmeelement (56) in der Nähe des bzw. der Drucksensor(en) (30) ein ringförmiger Kanal (126) ausgebildet ist, der mit einem niedrigviskosen bis flüssigen Druckübertragungsmedium gefüllt ist.

12. Momentmeßvorrichtung mit einem reellen oder virtuellen Hebelarm (304;308) vorzugsweise konstanter Länge zwischen dem Kraftangriffspunkt (306) und einem Drehlagerpunkt (302), dadurch gekennzeichnet, daß
als Drehlagerpunkt mindestens ein Kraftübertragungselement (300) nach einem der Ansprüche 1 bis 8 dient, und daß mindestens ein weiteres derartiges Kraftübertragungselement (300) zur Bestimmung der Kraft dient, die am Hebelarm (304;308) angreift, wobei die zentralen Punkte (302) der Kraftübertragungselemente (300) als virtuelle Drehpunkte wirken und in einer Ebene im wesentlichen senkrecht zur Kraftrichtung (F) liegen.

13. Verfahren zum Herstellen von Kraftübertragungselementen nach einem der Ansprüche 1 bis 8, gekennzeichnet durch Eingießen von elastomerem Material in die in axialer Kraftmeßrichtung verformbare Einfassung, wobei die Einfassung (118;148;151;154) als Form dient.

14. Verwendung von Kraftübertragungselementen nach einem der Ansprüche 1 bis 8 für großflächige Plattformwaagen aus zwei planparallelen Platten, dadurch gekennzeichnet, daß
eine größere Anzahl von Drucksensoren (30) verteilt in dem als Zwischenschicht aus elastomerem Material ausgebildeten Block (224) angeordnet ist, der von der Einfassung (222) umgeben ist.

## Claims

1. A force transmission element for force and/or moment measuring devices including a block (14;54;114;174;184; 204;214;224) made of elastomeric material, said block being tightly enclosed and deformable in an axial force measuring direction, but not expandable in a cross section perpendicular thereto, for transmitting forces onto at least one force or pressure sensor (30) arranged within said block or in close contact with the elastomeric material thereof,
characterized in that
the enclosure in the form of a jacket (118;148;151;154; 177;178;186;196;202,206;212,216;222) or a corset (18;46;48; 58,60) is deformable in an axial force measuring direction.

2. The force transmission element of claim 1, characterized in that the jacket comprises at least one bellow (118;177,178;186;196) made of metal, an inelastic web, a hose or synthetic material or that the jacket (148;151;154,202,206;212,216;222;226) is formed of sheet material or as a synthetic layer.

3. The force transmission element of claim 1, characterized in that the corset comprises at least one helical spring (18), rings (46) spaced from each other and arranged axially side-by-side, or rows of rings (48) spacedly arranged concentrically to each other.

4. Force transmission element of any of the preceding claims, characterized in that the enclosure formed as a jacket, in particular as a bellow (118;186;196) or as a corset (18;46;48;58,60), is at least to a major part embedded in the elastomeric material of the block (14,54;114,144;184), in particular moulded therein.

5. The force transmission element of claim 4, characterized in that the elastomeric material is fixedly adhering to the enclosure (118;148;151;154;177;178;186;196;202,206; 212,216;222).

6. Force transmission element of any of the preceding claims, characterized in that the block (184) is covered at its upper and/or lower side(s) with a thin metal plate (93,94).

7. Force transmission element of any of the preceding claims, characterized by movement limiting means (33,35) arranged between a force introduction element (12) and a force receiving element (16) with block (14) secured therebetween.

8. Force transmission element according to any of the preceding claims, characterized in that the block (204;214;224) is formed flat, in particular disc-, ring- or tape-like, with the jacket comprising two-part-, in particular half-shells (202,206;212,216) connected to each other at an exterior rim (207;217).

9. A force measuring device, characterized by the use of a force transmission element of any of the preceding claims and further characterized in that the pressure sensor(s) (30) is (are) embedded in the block (f. i. 14) or is (are) in close contact with the elastomeric material thereof, with the pressure sensor(s) (30) being held in a form-stable support body (82) integrated in said block (f. i. 184).

10. A force measuring device, characterized by the use of a force transmission element according to any of the preceding claims and further characterized in that the force measuring device (50;98;160;170;210) is of ring-type, the block (54;174;214) of elastomeric material being of ring-type and being peripherally enclosed, both on the exterior and interior, in a corset (58,60) or jacket (177,178;212,216).

11. The force measuring device of claim 10, characterized in that the block (54;174;214) is arranged between a plate-type force introduction element (52) and a plate-type force receiving element (56) having a central passage (66,68;219) each, the force receiving element (56) being provided adjacent to the pressure sensor(s) (30) with a ring-type channel (126) filled with a low-viscous to liquid pressure transmission medium.

12. A moment measuring unit including a real or virtual lever arm (304;308) of preferably constant length between the force introduction point (306) and a rotational support point (302), characterized in that as a rotational support point at least one force transmission element (300) according to any of claims 1 to 8 is used and that at least one further force transmission element (300) of such a kind serves for determining the force acting at the lever arm (304;308), with the central points (302) of the force transmission elements (300) acting as virtual rotational points and lying in a plane essentially perpendicular to the force direction (F).

13. A method for manufacturing force transmission elements according to any of claims 1 to 8, characterized by casting elastomeric material in the enclosure being deformable in an axial force measuring direction, said enclosure (118;148;151;154) serving as a mould.

14. Use of force transmission elements according to any of claims 1 to 8 for flat-spread platform scales comprising two plane parallel plates, characterized in that a larger number of pressure sensors (30) is arranged in a distributed manner in the block (224) formed as an intermediate layer of elastomeric material and surrounded by the enclosure (222).

## Revendications

1. Elément de transmission des forces pour des dispositifs de mesure des forces et/ou des couples, comprenant un bloc en élastomère (14 ; 54 ; 114 ; 174 ; 184 ; 204 ; 214 ; 224), cependant que le bloc, en vue de la transmission de forces à au moins un capteur de force ou de pression (30) qui est situé à l'intérieur du bloc ou qui est en contact avec l'élastomère de celui-ci, est confiné étroitement en pouvant être déformé dans la direction axiale de mesure des forces, mais en n'étant pas extensible selon la section transversale perpendiculaire à celle-ci, caractérisé par le fait que le confinement qui est réalisé sous la forme d'une enveloppe (118 ; 148 ; 151 ; 154 ; 177, 178 ; 186 ; 196 ; 202, 206 ; 212, 216 ; 222) ou d'un corset (18 ; 46 ; 48 ; 58, 60) peut être déformé dans la direction axiale de mesure des forces.

2. Elément de transmission des forces selon la revendication 1, caractérisé par le fait que l'enveloppe est constituée par au moins un soufflet en métal (118 ; 177, 178 ; 186 ; 196), par un tissu, un tuyau ou une matière plastique non élastique, ou que l'enveloppe (148 ; 151 ; 154 ; 202, 206 ; 212, 216 ; 222) est réalisée sous la forme d'une tôle ou d'une couche en matière plastique.

3. Elément de transmission des forces selon la revendication 1, caractérisé par le fait que le corset est constitué par au moins un ressort hélicoïdal (18), par des bagues (46) juxtaposées dans le sens axial et situées à distance les unes des autres ou par des séries de bagues (48) disposées coaxialement à distance les unes des autres.

4. Elément de transmission des forces selon l'une des revendications précédentes, caractérisé par le fait que le confinement qui est réalisé sous la forme d'une enveloppe, et en particulier sous celle d'un soufflet (118 ; 186 ; 196), ou sous la forme d'un corset (18 ; 46 ; 48 ; 58, 60), est noyé, et en particulier noyé par moulage, dans l'élastomère du bloc (14 ; 54 ; 114, 144 ; 184), du moins sur une grande partie.

5. Elément de transmission des forces selon la revendication 4, caractérisé par le fait que l'élastomère adhère fortement au confinement (118 ; 148 ; 151 ; 154 ; 177, 178 ; 186 ; 196 ; 202, 206 ; 212, 216 ; 222)

6. Elément de transmission des forces selon l'une des revendications précédentes, caractérisé par le fait que le bloc (184) est recouvert sur son côté supérieur et/ou inférieur par une plaque métallique mince (93, 94).

7. Elément de transmission des forces selon l'une des revendications précédentes, caractérisé par des dispositifs de limitation des déplacements (33, 35) qui sont disposés entre un élément d'application des forces (12) et un élément de réception des forces (16) entre lesquels le bloc (14) est maintenu.

8. Elément de transmission des forces selon l'une des revendications précédentes, caractérisé par le fait que le bloc (204 ; 214 ; 224) est réalisé en étant plat, et en particulier sous la forme d'un disque, d'une couronne ou d'une bande, cependant que l'enveloppe est constituée par deux parties de coquille, et en particulier par des demi-coquilles (202, 206 ; 212, 216) qui sont reliées entre elles sur un bord extérieur (207 ; 217).

9. Dispositif de mesure des forces, caractérisé par l'utilisation d'un élément de transmission des forces selon l'une des revendications précédentes, et caractérisé en outre par le fait que le ou les capteurs de pression (30) est ou sont noyé(s) dans le bloc (par exemple 14) ou est ou sont en contact étroit avec l'élastomère de celui-ci, cependant que le ou les capteurs de pression (30) est ou sont maintenu(s) dans un corps d'appui (82) dont la forme est immuable et qui est intégré au bloc (par exemple 184).

10. Dispositif de mesure des forces, caractérisé par l'utilisation d'un élément de transmission des forces selon l'une des revendications précédentes, et caractérisé en outre par le fait que le dispositif de mesure des forces (50 ; 98 ; 170 ; 210) est annulaire, cependant que le bloc en élastomère (54 ; 174 ; 214) est annulaire, et qu'il est confiné à chaque fois sur son pourtour, tant extérieurement qu'intérieurement, dans un corset (58, 60) ou dans une enveloppe (177, 178 ; 212, 216).

11. Dispositif de mesure des forces selon la revendication 10, caractérisé par le fait que le bloc (54 ; 174 ; 214) est disposé entre un élément d'application des forces en forme de plaque (52) et un élément de réception des forces en forme de plaque (56) qui sont pourvus chacun d'une ouverture centrale (66, 68 ; 219), cependant qu'il est formé dans l'élément de réception des forces (56), au voisinage du ou des capteurs de pression (30), un canal annulaire (126) qui est rempli d'un fluide de transmission des forces faiblement visqueux à liquide.

12. Dispositif de mesure des couples, comprenant un bras de levier réel ou virtuel (304 ; 308), de préférence d'une longueur constante, entre le point d'application des forces (306) et un point de montage en rotation (302), caractérisé par le fait qu'au moins un élément de transmission des forces (300) selon l'une des revendications 1 à 8 sert de point de montage en rotation, et par le fait qu'au moins un autre élément de transmission des forces de ce genre (300) sert à déterminer la force qui agit sur le bras de levier (304 ; 308), cependant que les points centraux (302) des éléments de transmission des forces (300) agissent comme des points de rotation virtuels, et qu'ils sont situés dans un plan qui est pour l'essentiel perpendiculaire à la direction de la force (F).

13. Procédé pour fabriquer des éléments de transmission des forces selon l'une des revendications 1 à 8, caractérisé par le fait que l'on moule un élastomère dans le confinement qui peut être déformé dans la direction axiale de mesure des forces, cependant que le confinement (118 ; 148 ; 151 ; 154) sert de moule.

14. Utilisation d'éléments de transmission des forces selon l'une des revendications 1 à 8 pour des ponts à bascule de grande surface constitués par deux plaques planes et parallèles, caractérisée par le fait qu'un très grand nombre de capteurs de pression (30) sont disposés en étant répartis dans le bloc (224) qui est réalisé sous la forme d'une couche intermédiaire en élastomère et qui est entouré par le confinement (222).
